# EUROPÄISCHE PATENTSCHRIFT

(11) **EP 4 542 516 B1**
(45) Veröffentlichungstag und Bekanntmachung des Hinweises auf die Patenterteilung: **15.04.2026**
(21) Anmeldenummer: 25161893.0
(22) Anmeldetag: 14.02.2020
(51) Int. Cl.: B60L 53/00, B60L 53/65, B60L 53/66, G07F 15/00, H02J 7/00, B60L 53/30, B60L 53/62, G06Q 20/40, G07F 9/02

(54) **VERFAHREN UND ANORDNUNG ZUM SCHUTZ EINER LADESTATION VOR MISSBRÄUCHLICHER NUTZUNG**
METHOD AND ARRANGEMENT FOR PROTECTING A CHARGING STATION AGAINST MISUSE
PROCÉDÉ ET DISPOSITIF DE PROTECTION D'UNE STATION DE CHARGE CONTRE UNE UTILISATION FRAUDULEUSE

(30) Priorität: 19.02.2019 DE 102019202247
(43) Veröffentlichungstag der Anmeldung: 23.04.2025
(62) Teilanmeldung aus: 20706985.7
(73) Patentinhaber: Siemens Aktiengesellschaft, 80333 München (DE)
(72) Erfinder: Bode, Sebastian, 59229 Ahlen (DE)
(74) Vertreter: Siemens Patent Attorneys

(56) Entgegenhaltungen:
- WO-A1-2014/180419
- CN-A- 107 277 033
- US-A1- 2016 059 804
- US-A1- 2018 336 551
- US-B2- 9 270 463

## Beschreibung

Die Erfindung betrifft den Schutz einer Ladestation vor missbräuchlicher Nutzung. Zur Identifizierung von Kunden in der Elektromobilität werden häufig einfache RFID-Karten eingesetzt. Bekannt ist, diese RFID-Karten gegen Kopieren durch geeignete Kommunikationsprotokolle zwischen Karte und Kartenleser besonders zu schützen.

Im Stand der Technik werden Verfahren gegen das Kopieren und Nachahmen von Identifikationsmerkmalen kontinuierlich weiterentwickelt. Durch die Nutzung aktueller Verfahren kann ein verhältnismäßig hoher Schutz gegen den Gebrauch durch Unberechtigte geschaffen werden. Ein Missbrauch durch Berechtigte kann hingegen nicht ausgeschlossen werden.

Für die Anmeldung bei Internet-Accounts ist eine Zwei-Faktor-Authentifizierung bekannt. Hierbei müssen seitens des Nutzers aktiv zwei Identifikationsmerkmale vorgelegt werden, welche jeweils über unterschiedliche Verfahren realisiert sind. Dies stellt einerseits eine Mehrbelastung für den berechtigten Nutzer dar und ist anderseits kein Schutz gegen den Missbrauch dieser Berechtigungsnachweise durch den berechtigten Nutzer, da diesem Zugriff auf beide Identifikationsmerkmale gegeben werden muss, wenn er diese handhaben soll.

CN 107 277 033 A und US 2018/336551 A1 offenbaren jeweils ein Verfahren zum Schutz einer Ladestation vor missbräuchlicher Nutzung, bei dem nach einer erfolgreichen Zwei-Faktor-Authentifizierung ein elektrischer Ladevorgang durch eine Ladestation autorisiert wird.

US 2016/059804 A1 offenbart, nach Prüfung eines ersten Identifikationsmerkmals als manuelle vorbereitende Handlung eine Entnahme eines Ladekabels aus einer Ladestation zu autorisieren. Der Ladevorgang selbst wird nach der Prüfung eines zweiten Identifikationsmerkmals autorisiert.

US 9 270 463 B2 offenbart ein Gerät zur Erkennung unautorisierter Ladeverbindungen zwischen Ladestationen und Batterien von elektrischen Fahrzeugen. Hierbei wird die Batterie durch das Gerät authentifiziert.

WO 2014/180419 A1 offenbart eine Authentifizierung eines Nutzers sowie eine Authentifizierung eines Fahrzeugs. Nachdem beide Authentifizierungen abgeschlossen sind, wird eine Kompatibilität für eine drahtlose Ladeverbindung überprüft.

Durch die vorliegende Erfindung soll eine Alternative zum Stand der Technik geschaffen werden.

Diese Aufgabe wird erfindungsgemäß dadurch gelöst, dass eine Einrichtung zum Schutz einer Ladestation vor missbräuchlicher Nutzung ein erstes Identifikationsmerkmal überprüft und einen elektrischen Ladevorgang autorisiert, sofern die Prüfung erfolgreich war.

Das Verfahren ist dadurch gekennzeichnet, dass die erste Einrichtung oder eine zweite Einrichtung vor und während oder lediglich während dem elektrischen Ladevorgang ein zweites Identifikationsmerkmal überprüft. Der elektrische Ladevorgang wird nur fortgesetzt, sofern die Prüfung des zweiten Identifikationsmerkmals erfolgreich war.

Die Anordnung zum Schutz einer Ladestation vor missbräuchlicher Nutzung umfasst eine erste Einrichtung, welche ausgebildet ist zur Überprüfung eines ersten Identifikationsmerkmals und Autorisierung eines elektrischen Ladevorgangs bei erfolgreicher Prüfung.

Die Anordnung ist gekennzeichnet durch eine Ausbildung der ersten Einrichtung zur Überprüfung eines zweiten Identifikationsmerkmals vor und während oder lediglich während des elektrischen Ladevorgangs, oder durch eine zweite Einrichtung, ausgebildet zur Überprüfung des zweiten Identifikationsmerkmals vor und während oder lediglich während des elektrischen Ladevorgangs. Die Anordnung ist weiterhin gekennzeichnet durch Mittel zur Fortsetzung des elektrischen Ladevorgangs nur bei erfolgreicher Prüfung des zweiten Identifikationsmerkmals.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Bei der ersten und zweiten Einrichtung handelt es sich beispielsweise um ein Backend bzw. einen Server, um einen Prozessor, beispielsweise einen Mikroprozessor oder Mikrocontroller, ein System-on-Chip oder einen programmierbaren Digitalbaustein, etwa ein "Field Programmable Gate Array" (FPGA).

Das Verfahren und die Anordnung beruhen auf der Idee, eine Authentifizierung bzw. Autorisierung mittels einer Zusatzauthentifizierung niederschwellig zu gestalten, indem eine schwache Identifizierung durch eine oder mehrere weitere automatische Identifizierungen ergänzt werden, welche auch kontinuierlich geprüft werden können. Somit entsteht einem Berechtigten und ehrlichen Verwender kein Mehraufwand, während gleichzeitig ein Schaden durch vertragswidriges Verhalten von Berechtigten stark reduziert werden kann.

Das Verfahren und die Anordnung unterstützen den Schutz vor einer unberechtigten Nutzung der Ladestation beispielsweise für den Fall, dass eine einfache RFID-Karte als erstes Identifikationsmerkmal entwendet oder missbräuchlich verwendet wird. So könnte beispielsweise eine Karte eines Fahrzeugs eines Car-Sharing-Anbieters genutzt werden, um damit Ladevorgänge für andere Fahrzeuge zu starten. Bei DC-Schnellladung könnte auf diese Weise in kurzer Zeit ein hoher Schaden verursacht werden. Bei AC-Ladung wäre ein entsprechender Schaden zwar aufgrund der geringeren Ladeleistung nur in längerer Zeit erreichbar. Hier könnte aber über einen auch für Laien einfach zu fertigenden Y-Stecker das gleichzeitige Laden mehrerer Fahrzeuge erreicht werden. All diesen missbräuchlichen Verwendungen des ersten Identifikationsmerkmals wird durch die Prüfung des zweiten Identifikationsmerkmals effektiv vorgebeugt, sofern das zweite Identifikationsmerkmal geeignet gewählt wird. Einige der geeigneten Wahlmöglichkeiten werden in den Ausführungsformen und Weiterbildungen näher erläutert.

Gemäß einer Ausführungsform wird das zweite Identifikationsmerkmal vollautomatisch in vorgegebenen Zeitabständen erneut überprüft, nachdem der elektrische Ladevorgang begonnen hat. Der elektrische Ladevorgang wird abgebrochen, sobald die Prüfung des zweiten Identifikationsmerkmals fehlschlägt.

Hierdurch wird einer missbräuchlichen Nutzung durch einen Befugten vorgebeugt. Die Ausführungsform unterscheidet sich von typischen IT-Verfahren insbesondere dadurch, dass ein zu hohes Vertrauen in die Stärke der Authentifizierung bei der Prüfung des ersten Identifikationsmerkmals nicht zu einem sehr großen Schaden führen muss, da die Schadenshöhe von der Dauer der unberechtigten Nutzung abhängt. Die Hürde für die Authentifizierung am Anfang wird also bewusst nur moderat (oder gar nicht) erhöht, während im Anschluss laufend überprüft wird, ob Manipulationsversuche vorliegen.

In einer Weiterbildung ist das erste Identifikationsmerkmal eine RFID-Karte, welche durch ein Backend überprüft wird. Das zweite Identifikationsmerkmal wird ebenfalls durch das Backend überprüft.

Bei dem Backend handelt es sich beispielsweise um ein Authentifizierungs- und Autorisierungsserver, welcher durch einen Betreiber der Ladeinfrastruktur bereitgestellt wird.

Gemäß einer Ausführungsform ist das zweite Identifikationsmerkmal ein Aufenthaltsort eines mobilen Endgeräts.

Bei dem mobilen Endgerät handelt es sich beispielsweise um ein Smartphone oder eine Smartwatch, welche ein Nutzer bei sich trägt. Die Prüfung des Aufenthaltsorts kann auch einfach als Prüfung auf lokale Anwesenheit implementiert werden.

In einer Weiterbildung bestimmt das mobile Endgerät seinen Aufenthaltsort mittels GPS, Mobilfunk oder WLAN und gibt diesen an die Ladestation aus. Alternativ ist die Ladestation mit einer Authentifizierungseinheit ausgerüstet, welche eine Anwesenheit des mobilen Endgeräts in einem lokalen drahtlosen Netzwerk überprüft.

Der Aufenthaltsort wird im ersten Fall direkt von dem mobilen Endgerät abgerufen. Alternativ wird das mobile Endgerät beispielsweise anhand einer Kennung, beispielsweise einer MAC-Adresse, in einem lokalen WLAN- oder Bluetooth-Netzwerk erkannt. Die Prüfung des Aufenthaltsorts kann auch lediglich eine Prüfung auf lokale Anwesenheit bedeuten.

Gemäß einer Ausführungsform ist das zweite Identifikationsmerkmal eine Anwesenheit einer oder mehrerer RFID-Karten.

Diese weiteren RFID-Karten befinden sich beispielsweise in einem Portemonnaie, welches ein Nutzer vor ein Lesegerät der Ladestation hält.

In einer Weiterbildung ist das zweite Identifikationsmerkmal ein Aufenthaltsort eines Fahrzeugs.

Beispielsweise handelt es sich bei dem ersten Identifikationsmerkmal um eine Ladekarte, welche von einem Carsharing-Anbieter einem bestimmten Kraftfahrzeug oder einer Flotte von Fahrzeugen zugeordnet wurde. Die Prüfung des Aufenthaltsorts kann auch einfach als Prüfung auf lokale Anwesenheit realisiert werden. Als zweites Identifikationsmerkmal wird also beispielsweise die Anwesenheit eines Kraftfahrzeugs aus der Flotte des Carsharing-Anbieters überprüft.

Gemäß einer Ausführungsform ist das zweite Identifikationsmerkmal ein Ladezustand und/oder eine Spannung einer Batterie eines Fahrzeugs und/oder ein Ladestrom ist.

Die genannten Merkmale können während des Ladevorgangs vorteilhaft als zweites Identifikationsmerkmal genutzt und überprüft werden. Der Ladestrom ist ein Beispiel für ein Identifikationsmerkmal, welches erst nach dem Beginn des Ladevorgangs zur Verfügung steht. Das zweite Identifikationsmerkmal kann auch ein Datensatz sein, welcher aus einer Mehrzahl von Merkmalen besteht, beispielsweise eine beliebige Kombination der in den Ausführungsformen, Weiterbildungen und Ausführungsbeispiele genannten Möglichkeiten.

In einer Weiterbildung wird im Rahmen der Prüfung des zweiten Identifikationsmerkmals überprüft, ob das zweite Identifikationsmerkmal Vergleichsinformationen entspricht, welche eine Ladesteuer-Einheit in der Ladestation bereitstellt.

Durch diese Weiterbildung kann beispielsweise erkannt werden, ob mittels eines Y-Steckers Ladestrom abgezweigt wird.

Gemäß einer Ausführungsform ist ein Zusatzgerät in dem Kraftfahrzeug eingebaut, welches das zweite Identifikationsmerkmal ausgibt.

Das Zusatzgerät ermöglicht etwa die Prüfung des Aufenthaltsorts bzw. der Anwesenheit des Fahrzeugs auch ohne Beteilung eines Fahrzeugherstellers.

In einer Weiterbildung unterstützt das Fahrzeug eine Fahrzeugeinspeisung mittels eines entsprechenden Kommunikationsprotokolls, insbesondere gemäß ISO 15118. Die Ladestation vermittelt eine Kommunikation zwischen dem Zusatzgerät und dem Backend.

Diese Weiterbildung erlaubt es, die Kommunikation als Mehrwertdienst über die Ladestation zu vermitteln. Diese Art der Datenübermittlung ist insbesondere für Privatnutzer interessant, da Kosten für Anschaffung und Betrieb des Zusatzgeräts reduziert werden und nicht von Haus aus in Rechnung gestellt werden.

Auf dem computerlesbaren Datenträger ist ein Computerprogramm gespeichert, welches das Verfahren ausführt, wenn es in einem Prozessor abgearbeitet wird.

Das Computerprogramm wird in einem Prozessor abgearbeitet und führt dabei das Verfahren aus.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Fig. 1: ein Ausführungsbeispiel einer Anordnung zum Schutz einer Ladestation LS vor missbräuchlicher Nutzung, und
- Fig. 2: einen beispielhaften Ablauf zum Schutz einer Ladestation LS vor missbräuchlicher Nutzung.

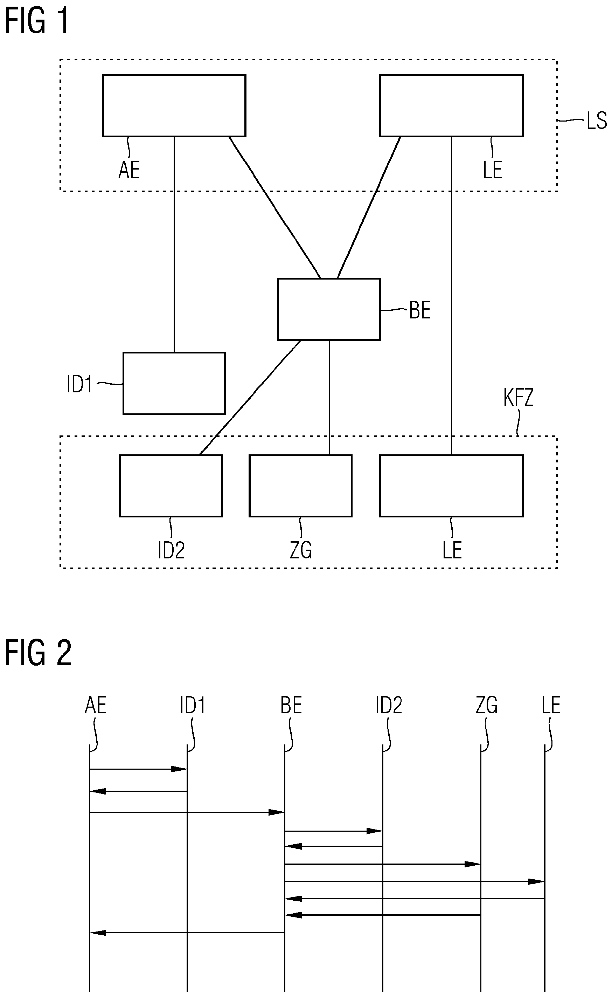

Figur 1 zeigt ein Ausführungsbeispiel einer Anordnung zum Schutz einer Ladestation LS vor missbräuchlicher Nutzung. Die Ladestation verfügt als erste Einrichtung über eine Authentifizierungseinheit AE, welche ausgebildet ist zur Überprüfung eines ersten Identifikationsmerkmals ID1 und Autorisierung eines Ladevorgangs für ein Fahrzeug KFZ. Sofern die Prüfung des ersten Identifikationsmerkmals ID1 erfolgreich ist, autorisiert die Authentifizierungseinheit AE eine Ladesteuereinheit LE der Ladestation LS, den Ladestrom für eine Ladesteuereinheit LE im Fahrzeug KFZ bereitzustellen.

Als zweite Einrichtung umfasst die Anordnung ein Backend BE, beispielsweise einen Server, welcher programmiert ist zur Überprüfung eines zweiten Identifikationsmerkmals ID2 vor und/oder während des Ladevorgangs, und zur Fortsetzung des Ladevorgangs nur bei erfolgreicher Prüfung des zweiten Identifikationsmerkmals ID2.

Zum Schutz der Ladestation wird also neben dem ersten Identifikationsmerkmal ID1 mindestens ein weiteres Identifikationsmerkmal ausgewertet, hier das zweite Identifikationsmerkmal ID2. Das zweite Identifikationsmerkmal ID2 kann hierbei auch mehrere unterschiedliche Merkmale umfassen, oder es kann neben dem zweiten Identifikationsmerkmal ID2 auch noch ein drittes oder viertes Identifikationsmerkmal geprüft werden. Das zweite Identifikationsmerkmal ID2 wird vorzugsweise automatisch und wiederholt durch das Backend BE geprüft.

In einem ersten Szenario erfolgt eine Identifikation eines Nutzers der Ladestation LS durch Vorlage einer RFID-Karte als erstes Identifikationsmerkmal ID1. Die Prüfung der Berechtigung der RFID-Karte kann wahlweise lokal durch die Authentifizierungseinheit AE oder zentral im Backend BE erfolgen. Das Backend BE prüft nun zusätzlich ein weiteres Merkmal, hier das zweite Identifikationsmerkmal ID2. Falls die RFID-Karte dem Nutzer gehört, kann als zweites Identifikationsmerkmal ID2 beispielsweise der Aufenthaltsort eines Smartphones oder einer Smartwatch des Nutzers durch Abfrage direkt beim Gerät geprüft werden. Darüber hinaus kann auch (durch einen entsprechenden Empfänger in der Ladestation LS) eine Anwesenheitsprüfung solcher Geräte über deren Kennung in Funknetzwerken (z.B. MAC-Adresse im WLAN, Bluetooth) erfolgen. Ebenfalls denkbar ist die Erfassung weiterer RFID-Karten als zweites Identifikationsmerkmal ID2 für den Fall, dass der Nutzer ein ganzes Portemonnaie vor ein Lesegerät der Authentifizierungseinheit AE hält.

In einem zweiten Szenario ist die RFID-Karte als erstes Identifikationsmerkmal ID1 dem Fahrzeug KFZ zugeordnet, welches dem Nutzer beispielsweise von einem Carsharing- oder Mietwagen-Anbieter überlassen wurde. In diesem Szenario kann als zweites Identifikationsmerkmal ID2 auch der Aufenthaltsort des bzw. der zugehörigen Fahrzeuge überprüft werden. Hierzu kann ggf. ein Zusatzgerät ZG im Fahrzeug KFZ installiert sein, sodass das Verfahren auch ohne Beteiligung des Fahrzeugherstellers durchgeführt werden kann. Das fahrzeugseitige Zusatzgerät ZG kann insbesondere auch weitere Informationen, wie zum Beispiel einen Ladezustand einer Batterie (SoC) oder eine Batteriespannung übermitteln, welche dann mit von der Ladesteuer-Einheit LE übermittelten Werten im Backend BE verglichen werden können.

In einer Variante wird das zweite Identifikationsmerkmal ID2 zum Schutz gegen missbräuchliche Nutzung durch einen Befugten nach einer initialen Überprüfung der Identifizierungsmerkmale erneut wiederholt geprüft. Dabei stehen mit Beginn des Ladevorgangs weitere Merkmale wie etwa der Ladestrom zur Verfügung, welche als Teil des zweiten Identifikationsmerkmals ID2 oder zusätzlich zu diesem überprüft werden können.

In einer weiteren Variante erfolgt eine Kommunikation gemäß ISO 15118 zwischen dem Backend BE und dem Zusatzgerät ZG im Fahrzeug KFZ. Diese kann als Mehrwertdienst über die Ladestation LS vermittelt werden. Diese Art der Datenübermittlung ist dabei insbesondere für Privatnutzer interessant, da die Kosten für Anschaffung und Betrieb des Zusatzgeräts so reduziert werden und nicht von Haus aus anfallen.

Figur 2 zeigt ein Ablaufdiagramm zum Schutz einer Ladestation vor missbräuchlicher Nutzung. Zunächst liest eine Authentifizierungseinheit AE ein erstes Identifikationsmerkmal ID1 aus, beispielsweise eine RFID-Karte, welche vor ein Lesegerät gehalten wird. Zur weiteren Prüfung sendet die Authentifizierungseinheit AE das erste Identifikationsmerkmal ID1 an ein Backend BE. Das Backend BE greift nun auf ein zweites Identifikationsmerkmal ID2 zu und überprüft dieses. Beispiele für das zweite Identifikationsmerkmal ID2 wurden bereits genannt. Anschließend fordert das Backend BE Daten von einem Zusatzgerät ZG in einem Fahrzeug an, beispielsweise einen Ladezustand einer Batterie (SoC) oder eine Batteriespannung, und gleicht diese Daten mit Informationen ab, welche das Backend BE von einer Ladesteuer-Einheit LE in der Ladestation anfordert und zurückerhält. So kann beispielweise überprüft werden, dass kein Ladestrom mit einem Y-Stecker abgezweigt wird. Sofern alle Prüfungen erfolgreich sind, meldet das Backend BE dies an die Authentifizierungseinheit AE zurück, sodass der Ladevorgang durch die Ladestation fortgesetzt werden kann.

Vorzugsweise laufen diese Prüfungen größtenteils im Hintergrund wiederholt vollautomatisch ab, während der Ladevorgang bereits begonnen hat. Für den Nutzer ergibt sich so eine relativ ungehinderte und niederschwellige Nutzungserfahrung. Im Betrugsfall wird der Ladevorgang abgebrochen, sobald die Prüfung fehlschlägt.

Obwohl die Erfindung durch die Ausführungsbeispiele im Detail illustriert und beschrieben wurde, ist sie nicht durch die offenbarten Beispiele eingeschränkt. Andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen können auch frei miteinander kombiniert werden.

## Patentansprüche

1. Anordnung zum Schutz einer Ladestation (LS) vor missbräuchlicher Nutzung,
mit einer ersten Einrichtung, welche ausgebildet ist zur
- Überprüfung eines ersten Identifikationsmerkmals (ID1) und
- Autorisierung eines elektrischen Ladevorgangs bei erfolgreicher Prüfung,
**gekennzeichnet durch**
- eine Ausbildung der ersten Einrichtung zur Überprüfung eines zweiten Identifikationsmerkmals (ID2) vor und während oder lediglich während des elektrischen Ladevorgangs, oder
- eine zweite Einrichtung, ausgebildet zur Überprüfung des zweiten Identifikationsmerkmals (ID2) vor und während oder lediglich während des elektrischen Ladevorgangs,
und
- Mittel zur Fortsetzung des elektrischen Ladevorgangs nur bei erfolgreicher Prüfung des zweiten Identifikationsmerkmals (ID2).

2. Anordnung nach Anspruch 1,
wobei die Anordnung ferner dazu ausgestaltet ist, dass
- das zweite Identifikationsmerkmal (ID2) vollautomatisch in vorgegebenen Zeitabständen erneut überprüft wird, nachdem der elektrische Ladevorgang begonnen hat, und
- der elektrische Ladevorgang abgebrochen wird, sobald die Prüfung des zweiten Identifikationsmerkmals (ID2) fehlschlägt.

3. Anordnung nach einem der vorhergehenden Ansprüche,
- bei der das erste Identifikationsmerkmal (ID1) eine RFID-Karte ist, welche durch ein Backend (BE) überprüft wird, und
- bei der das zweite Identifikationsmerkmal (ID2) ebenfalls durch das Backend (BE) überprüft wird.

4. Anordnung nach einem der vorhergehenden Ansprüche,
- bei der das zweite Identifikationsmerkmal (ID2) ein Aufenthaltsort eines mobilen Endgeräts ist.

5. Anordnung nach Anspruch 4,
- bei der das mobile Endgerät seinen Aufenthaltsort mittels GPS, Mobilfunk oder WLAN bestimmt und an die Ladestation (LS) ausgibt, oder
- bei der die Ladestation (LS) mit einer Authentifizierungseinheit (AE) ausgerüstet ist, welche eine Anwesenheit des mobilen Endgeräts in einem lokalen drahtlosen Netzwerk überprüft.

6. Anordnung nach einem der Ansprüche 1 bis 3,
- bei der das zweite Identifikationsmerkmal (ID2) eine Anwesenheit einer oder mehrerer RFID-Karten ist.

7. Anordnung nach einem der Ansprüche 1 bis 3,
- bei der das zweite Identifikationsmerkmal (ID2) ein Aufenthaltsort eines Fahrzeugs (KFZ) ist.

8. Anordnung nach einem der Ansprüche 1 bis 3,
- bei der das zweite Identifikationsmerkmal (ID2) ein Ladezustand und/oder eine Spannung einer Batterie eines Fahrzeugs (KFZ) und/oder ein Ladestrom ist.

9. Anordnung nach Anspruch 8,
wobei die Anordnung ferner dazu ausgestaltet ist, dass
- im Rahmen der Prüfung des zweiten Identifikationsmerkmals (ID2) überprüft wird, ob das zweite Identifikationsmerkmal (ID2) Vergleichsinformationen entspricht, welche eine Ladesteuer-Einheit (LE) in der Ladestation (LS) bereitstellt.

10. Anordnung nach einem der Ansprüche 7 bis 9,
- bei der ein Zusatzgerät (ZG) in dem Kraftfahrzeug (KFZ) eingebaut ist, welches das zweite Identifikationsmerkmal (ID2) ausgibt.

11. Anordnung nach Anspruch 3 und 10,
- bei der das Fahrzeug (KFZ) eine Fahrzeugeinspeisung mittels eines entsprechenden Kommunikationsprotokolls, insbesondere gemäß ISO 15118, unterstützt, und
- bei der die Ladestation (LS) eine Kommunikation zwischen dem Zusatzgerät (ZG) und dem Backend (BE) vermittelt.

## Claims

1. Arrangement for protecting a charging station (LS) against improper use,
having a first device that is designed to
- check a first identification feature (ID1) and
- authorize an electrical charging procedure if the inspection was successful,
**characterized by**
- a design of the first device to check a second identification feature (ID2) before and during or only during the electrical charging procedure, or
- a second device, designed to check the second identification feature (ID2) before and during or only during the electrical charging procedure,
and
- means for continuing the electrical charging procedure only if the inspection of the second identification feature (ID2) was successful.

2. Arrangement according to Claim 1,
wherein the arrangement is furthermore configured such that
- the second identification feature (ID2) is checked again fully automatically at predefined time intervals after the electrical charging procedure has begun, and
- the electrical charging procedure is terminated as soon as the inspection of the second identification feature (ID2) fails.

3. Arrangement according to either of the preceding claims,
- in which the first identification feature (ID1) is an RFID card that is checked by a backend (BE), and
- in which the second identification feature (ID2) is likewise checked by the backend (BE).

4. Arrangement according to one of the preceding claims,
- in which the second identification feature (ID2) is a location of a mobile terminal.

5. Arrangement according to Claim 4,
- in which the mobile terminal determines its location by way of GPS, mobile radio or WLAN and outputs said location to the charging station (LS), or
- in which the charging station (LS) is equipped with an authentication unit (AE) that checks the presence of the mobile terminal in a wireless local area network.

6. Arrangement according to one of Claims 1 to 3,
- in which the second identification feature (ID2) is the presence of one or more RFID cards.

7. Arrangement according to one of Claims 1 to 3,
- in which the second identification feature (ID2) is a location of a vehicle (KFZ).

8. Arrangement according to one of Claims 1 to 3,
- in which the second identification feature (ID2) is a state of charge and/or a voltage of a battery of a vehicle (KFZ) and/or a charging current.

9. Arrangement according to Claim 8,
wherein the arrangement is furthermore configured such that,
- in the course of the inspection of the second identification feature (ID2), it is checked whether the second identification feature (ID2) corresponds to comparison information provided by a charging control unit (LE) in the charging station (LS).

10. Arrangement according to one of Claims 7 to 9,
- in which an additional device (ZG) is installed in the motor vehicle (KFZ) and outputs the second identification feature (ID2).

11. Arrangement according to Claims 3 and 10,
- in which the vehicle (KFZ) supports a vehicle supply by way of a corresponding communication protocol, in particular in accordance with ISO 15118, and
- in which the charging station (LS) conveys communication between the additional device (ZG) and the backend (BE).

## Revendications

1. Dispositif permettant de protéger une station de charge (LS) contre une utilisation abusive, comprenant un premier dispositif qui est conçu pour
- vérifier une première caractéristique d'identification (ID1) et
- autoriser une opération de charge électrique en cas de vérification réussie,
**caractérisé par**
- une conception du premier dispositif permettant de vérifier une seconde caractéristique d'identification (ID2) avant et pendant ou seulement pendant l'opération de charge électrique, ou
- un deuxième dispositif, conçu pour vérifier la deuxième caractéristique d'identification (ID2) avant et pendant ou seulement pendant l'opération de charge électrique,
et
- des moyens permettant de poursuivre l'opération de charge électrique uniquement en cas de vérification réussie de la deuxième caractéristique d'identification (ID2).

2. Dispositif selon la revendication 1,
dans lequel le dispositif est en outre conçu pour que
- la deuxième caractéristique d'identification (ID2) soit à nouveau vérifiée de manière entièrement automatique à des intervalles de temps prédéfinis après que l'opération de charge électrique a commencé, et
- l'opération de charge électrique soit interrompue dès que la vérification de la deuxième caractéristique d'identification (ID2) échoue.

3. Dispositif selon l'une quelconque des revendications précédentes,
- dans lequel la première caractéristique d'identification (ID1) est une carte RFID qui est vérifiée par un backend (BE), et
- dans lequel la deuxième caractéristique d'identification (ID2) est également vérifiée par le backend (BE).

4. Dispositif selon l'une quelconque des revendications précédentes,
- dans lequel la deuxième caractéristique d'identification (ID2) est la localisation d'un terminal mobile.

5. Dispositif selon la revendication 4,
- dans lequel le terminal mobile détermine sa localisation à l'aide du GPS, de la téléphonie mobile ou du réseau local sans fil et la transmet à la station de charge (LS), ou
- dans lequel la station de charge (LS) est équipée d'une unité d'authentification (AE) qui vérifie la présence du terminal mobile au sein d'un réseau local sans fil.

6. Dispositif selon l'une quelconque des revendications 1 à 3,
- dans lequel la deuxième caractéristique d'identification (ID2) est la présence d'une ou plusieurs carte(s) RFID.

7. Dispositif selon l'une quelconque des revendications 1 à 3,
- dans lequel la deuxième caractéristique d'identification (ID2) est la localisation d'un véhicule (KFZ).

8. Dispositif selon l'une quelconque des revendications 1 à 3,
- dans lequel la deuxième caractéristique d'identification (ID2) est l'état de charge et/ou la tension d'une batterie d'un véhicule (KFZ) et/ou le courant de charge.

9. Dispositif selon la revendication 8,
dans lequel le dispositif est en outre conçu pour
- dans le cadre de la vérification de la deuxième caractéristique d'identification (ID2), vérifier si la deuxième caractéristique d'identification (ID2) correspond à des informations de comparaison fournies par une unité de commande de charge (LE) de la station de charge (LS).

10. Dispositif selon l'une quelconque des revendications 7 à 9,
- dans lequel un appareil supplémentaire (ZG) émettant la deuxième caractéristique d'identification (ID2) est installé dans le véhicule (KFZ).

11. Dispositif selon les revendications 3 et 10,
- dans lequel le véhicule (KFZ) prend en charge l'alimentation du véhicule au moyen d'un protocole de communication approprié, en particulier conformément à la norme ISO 15118, et
- dans lequel la station de charge (LS) assure une communication entre l'appareil supplémentaire (ZG) et le backend (BE).
